# EUROPEAN PATENT APPLICATION

(11) **EP 4 813 764 A1**
(43) Date of publication of application: **30.09.2026**
(21) Application number: 26168228.0
(22) Date of filing: 26.03.2026
(51) Int. Cl.: B60R 25/24, B60R 25/25, B60R 25/23, A42B 3/00, B62J 45/00, A42B 3/04, B62H 5/00

(54) **A VEHICLE CONTROLLER AND A METHOD OF UNLOCKING A VEHICLE**

(30) Priority: 29.03.2025 IN 202541031084
(71) Applicant: TVS Motor Company Limited, 600006 Chennai (IN)
(72) Inventor: Joshi, Neeraj, 600006 Chennai (IN); Nanjundaswamy, Likith Malavalli, 600006 Chennai (IN)
(74) Representative: Patentanwaltskanzlei Matschnig & Forsthuber OG

(57) **Abstract**

The claimed subject matter discloses a vehicle controller 102 and a method 200 of remotely unlocking a vehicle 105. The method 200 comprises detecting the folding of a side stand of the vehicle 105, starting a timer 115, receiving and validating a user identification, automatically determining a helmet status by analyzing helmet data and unlocking the vehicle 105 when the user identification is valid, the rider is wearing a helmet and the timer has not expired. If the timer expires, the authentication and helmet status verification is done in manual mode.

## Description

### TECHNICAL FIELD

The claimed subject matter in general relates to vehicle access control systems. The claimed subject matter in particular relates to providing accessibility to a vehicle after a user authentication and additionally after ensuring that the user is wearing a helmet before starting the vehicle. Providing accessibility to the vehicle refers to unlocking the vehicle.

### BACKGROUND

For a two wheeled motor vehicle rider, it is important that the rider wears a helmet as a security measure. The helmet saves the rider during accidents, from head injuries. Though in some regions it is mandated by law to wear a helmet, the riders skip wearing helmet, risking their lives.

Another aspect is secure user identification for accessing the vehicle. Presently, the accessibility to vehicles is through a key, key-fob etc. In some vehicles, it may be through a mobile app running on a mobile phone.

It is also seen that the users take longer time to wear a helmet during a stop, causing inconvenience to other riders on the road. There could be instances where the rider takes an excessive amount of time to authenticate to the vehicle, causing unnecessary delays or complications. Riders may forget or be distracted during the authentication process, leaving the vehicle in an uncertain state. In addition, riders might forget or skip steps while using various authentication methods like camera verification, temperature sensors, or capacitance detection. Without a fixed time window, they may not be prompted to complete the authentication process, creating a security risk. There may be potential problem of riders neglecting or bypassing crucial safety checks due to lack of awareness or attention.

The known arts provide access to a vehicle using different techniques. Some arts use biometric data for accessing the vehicle, or password or a mobile application. However they focus more on secure vehicle access and less on the user safety. There is no fixed time duration for authenticating, thereby leading to delays in authentication causing inconvenience to the user and other riders. The known arts fall short of providing personal safety to the user in addition to secure access to the vehicle.

Hence, there is a need for a device which provides personal safety to the rider as well as secure access to the vehicle.

### SUMMARY

The claimed subject matter is defined in the independent claims. Further details are defined in the dependent claims.

The subject matter discloses a vehicle controller and a method for providing access to a vehicle.

In an aspect the subject matter discloses a method to provide access to a vehicle, the method performed by a vehicle controller. The method comprises detecting a side stand of a vehicle moving to a disengaged position, the disengaged position is the one where the vehicle is not supported by the side stand. The method comprises starting a timer; receiving an user identification, if the timer has not expired; receiving a helmet data before the expiry of the timer. The method comprises comparing the received user identification with one or more pre-stored user identifications; checking, when the received user identification matches with at least one pre-stored user identification, whether a helmet data indicates that the user is wearing the helmet. The method comprises unlocking the vehicle, if the timer has not expired, received user identification matches with at least one pre-stored user identification and the helmet data indicates that the user is wearing the helmet.

In an aspect the method discloses generating an indication to the user to re-start the user authentication if the timer expires. In an aspect the method discloses receiving the user identification; receiving a helmet status, through at least one of a facial image of a user from a camera installed in the dashboard of the vehicle, data form temperature sensors and touch sensors placed inside the helmet; comparing the received user identification with at least one pre-stored user identification; checking, when the received user identification matches with at least one pre-stored user identification, whether a helmet status indicates that the user is wearing the helmet; and unlocking the vehicle, if the received user identification matches with at least one pre-stored user identification, the helmet status indicates that the user is wearing the helmet.

In an aspect the method discloses determining the helmet status as the user wearing the helmet, based on at least one of detecting the helmet in the facial image of the user, temperature sensors in the helmet provide an output above a predefined threshold and the touch sensors in the helmet provide an output above a predefined threshold.

### BRIEF DESCRIPTION OF THE DRAWINGS

The detailed description is described with reference to the accompanying figures. In the figures, similar reference numerals are used throughout the drawings to reference like features and components.
Figure 1 illustrates a vehicle controller for remotely unlocking a vehicle
Figure 2 illustrates a method of remotely unlocking a vehicle

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate a two wheeled motor vehicle which includes ICE driven or electrically driven vehicles. The term 'coupled' is used to indicate coupling between different elements, it may mean directly coupled or indirectly coupled through additional elements. The terms 'module' and 'component' may be used interchangeably. The terms 'Rider' and 'User' may be used interchangeably.

Only the details/components required to describe the claimed subject matter in specific, are disclosed in this document. The details/components which are commonly known or understood by people skilled in the art may not be covered in this document.

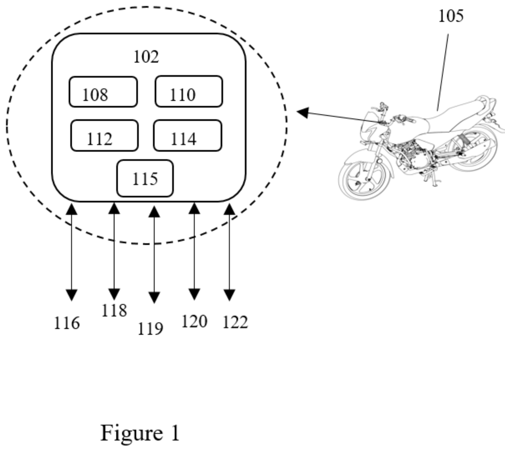

Figure 1 discloses a vehicle controller 102 for remotely unlocking the vehicle 105. The vehicle controller 102 is part of the vehicle 105. The vehicle controller 102 is referred as controller 102. The controller 102 comprises a processor 108, a memory 110 coupled to the processor 108, input output interfaces 112. In an embodiment the controller 102 comprises a communication unit 114. In an embodiment the communication unit 114 may be external to the controller 102. The controller 102 comprises a timer 115 to provide a time duration to automatically detect that the user has completed all the authentications including wearing of the helmet before the timer 115 expires. In an embodiment, the timer is displayed in the dashboard.

The controller 102 is connectable to different user identification instrument, for example, a camera 116, a fingerprint sensor 118 and a voice authentication unit 119 placed in a dashboard of the vehicle 105, through the input output interfaces 112. The controller 102 communicates with the camera 116, fingerprint sensor 118 and the voice authentication unit 119 using standard connections. The helmet is a smart helmet and comprises temperature sensors 120 and touch sensors 122 embedded in few places inside the helmet. The controller 102 receives the data from temperature sensors 120 and touch sensors 122 through the input output interfaces 112.

When the user wants to start the vehicle 105, the user needs to bring the side stand to a folded position. Folded position is where the side stand is not supporting the vehicle 105. Side stand is not shown in figure 1. The controller 102 detects the folding of the side stand through a sensor and starts the timer 115. The user needs to provide the user identification. The user identification may be a biometric data, a password, a signal from a key-fob, insertion of a key etc. The biometric data may comprise at least one of a facial image, a finger print data, a voice command etc.

The controller 102 receives the user identification and compares the received user identification with one or more pre-stored user identifications. The pre-stored use identifications may be stored during a store mode of the controller 102. The pre-stored identifications may comprise identifications of multiple users, as multiple users may use the vehicle 105. If the received user identification matches with at least one pre-stored user identification, the first level authentication is a success. If the received user identification does not match with at least one pre-stored user identification, the first level authentication is a failure and the user may be indicated with an indication regarding the failed access. The indication may be a lamp on a dash board of the vehicle 105 or an audio output.

Once the first level authentication is success, the controller 102 activates the camera 116 and takes a facial image of the user. The controller 102 analyzes the facial image to determine whether the user is wearing a helmet. When the controller 102 determines that the user is wearing the helmet, the status of the helmet is set as 'wearing'. When the user is not wearing the helmet, the status of the helmet is set as 'not wearing'. When the helmet status is determined as 'wearing' the second level of authentication is a success.

The first level and second level of authentications have to be successfully completed before the expiry of the timer 115.

In alternate embodiments, the status of helmet may be determined by monitoring the temperature sensor 120 of the helmet or the touch observed by the touch sensors 122 embedded in the helmet. The controller 102 receives the temperature data and the touch data from respective sensors through input output interfaces 112. If the temperature is above a pre-defined threshold, the status of the helmet is determined as 'wearing' otherwise as 'not wearing'. If the touch data is above a pre-defined threshold, the status of the helmet is determined as 'wearing' otherwise as 'not wearing'. When the helmet status is determined as 'wearing' the second level authentication is a success.

Once the first level and second level of authentications are success, the access is provided to the vehicle 105 to enable the user to start the vehicle 105.

Providing access to the vehicle 105 comprises unlocking the vehicle 105. In addition the electric system of the vehicle 105 is activated to enable the user to start the vehicle 105.

Unlocking the vehicle 105 comprises at least one of unlocking the handle lock and activating the electric system of the vehicle 105. Unlocking the handle lock may be performed by electro-mechanical components like, cables, lever, a solenoid or any other electro-mechanical component. The electro-mechanical components are controlled by the input output interfaces 112 of the controller 102. Activating the electric system of the vehicle 105 may be performed using an electronic switch. Activating the electric system may refer to closing the electric circuits so that the vehicle 105 can be started. Now the vehicle 105 is unlocked and ready for the user to start.

If the first level or the second level of the authentication is a failure or the timer 115 expires before both the authentications are successfully completed, the controller 102 indicates the user that the automatic authentication has failed and the authentication needs to be performed again though manually. This is referred as manual mode. The indication may be through a lamp or through an audio output. This is referred as manual mode.

The controller 102 prompts the user through a lamp or through an audio output or through a notification on display, to provide the user identification. The controller 102 receives the user identification and verifies against the pre-stored user identifications. Once the first level authentication is a success, the controller 102 indicates the user through a lamp or through an audio output, to wear the helmet to determine the status of the helmet. Once the user wears the helmet, the controller receives at least one of a facial image of the user, temperature of the helmet from the temperature sensors 120 and the touch data from the touch sensors 122. The controller 102 determines the status of the helmet by analyzing at least one of a facial image of the user, temperature of the helmet from the temperature sensors 120 and the touch data from the touch sensors 122. If the temperature of the helmet is above a pre-defined threshold, the status of the helmet is determined as 'wearing' otherwise as 'not wearing'. If the touch data is above a pre-defined threshold, the status of the helmet is determined as 'wearing' otherwise as 'not wearing'. When the controller 102 determines that the user is wearing the helmet in the facial image, the status of the helmet is set as 'wearing'. When the user is not wearing the helmet, the status of the helmet is set as 'not wearing'.

If the status of the helmet is determined as 'wearing' the second level authentication is a success and the access is provided to the vehicle 105 as explained in the previous paragraphs. Providing access is unlocking the vehicle 105.

The controller 102 may automatically activate and de-activate the camera 116 based on the ambient light. The controller 102 may ignore the temperature from the temperature sensors 120 for deciding the helmet status, when the ambient temperature may influence the temperature of the helmet while worn. In such cases other biometric data and the touch sensors 122 are used for determining the status of the helmet.

When the vehicle 105 is in motion, the controller 102 regularly analyzes the helmet data to make sure that the rider is wearing the helmet. If the vehicle 105 is in motion and the controller 102 determines that the rider is removing the helmet or has removed the helmet, the controller 102 generates an indication to the rider to reduce the speed of the vehicle 105 and wear the helmet.

All the indications to the user may be in the form of switching on lamps in the dashboard, generating a beep, generating an audio message etc. The speaker and the lamps are in the dashboard and are controlled by the input output interfaces 112.

The processor 108 may comprise one or more of central processing units (CPU), digital signal processors (DSP), application specific integrated circuits (ASIC), a controller, field programmable gate arrays (FPGA), or any other hardware device, a firmware device, or any combination of these. The processor is configured using control registers, input output ports, firmware, input output interfaces etc. to perform the operations described herein.

In an embodiment, the memory 110 and comprises one or more volatile and nonvolatile memory components which are capable of storing data and instructions to be executed.

In an embodiment, the controller 102 is a standalone unit connectable to the dashboard and other sensors. In an embodiment, the vehicle controller 102 may be implemented in any existing Electronic Control Unit, ECU, in the vehicle 105.

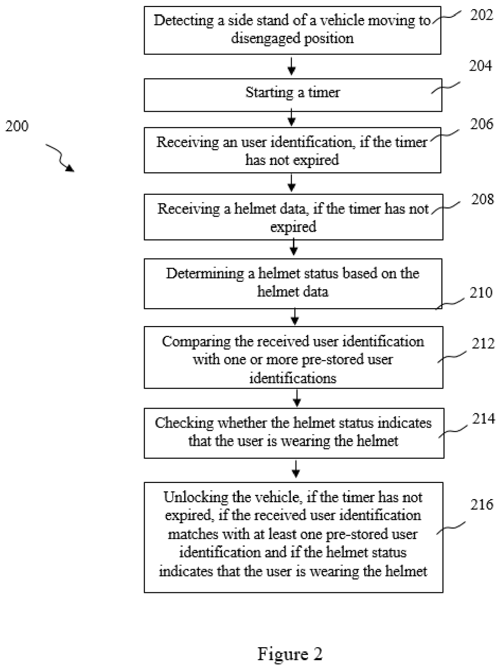

Figure 2 illustrates a method 200 of remotely unlocking a vehicle 105, the method 200 performed by the controller 102. Step 202 discloses detecting a side stand of a vehicle moving to a folded position. Step 204 discloses starting a timer 115. Step 206 discloses receiving a user identification, if the timer has not expired. Step 208 discloses receiving, if the timer has not expired, a helmet data. Step 210 discloses determining a helmet status based on the helmet data. Step 212 discloses comparing the received user identification with one or more pre-stored user identifications. Step 214 discloses checking whether the helmet status indicates that the user is wearing the helmet. Step 216 discloses unlocking the vehicle, if the timer 115 has not expired, if the received user identification matches with at least one pre-stored user identification and if the helmet status indicates that the user is wearing the helmet.

The method further discloses manual authentication of the user when the timer 115 expires and the automatic authentication is not successful. In manual authentication the user can select which bio-metric data to provide. If the ambient lighting is good, the user can provide a facial image by facing towards the camera. If the ambient light is not good, the user can provide finger print data or a voice command.

The subject matter has below technical advantages, for example.

The subject matter ensures that the vehicle 105 cannot be started without confirming helmet usage, directly promoting rider safety by preventing unauthorized operation without a helmet.

The timer 115 ensures that the rider completes authentication within a fixed time duration, reducing delays and promoting efficiency during the authentication process.

The subject matter enforces helmet verification through sensors, i.e. camera 116, temperature sensors 120 and touch sensors 122 before allowing the vehicle 105 to start, eliminating the possibility of bypassing safety protocols.

The subject matter detects helmet removal while the vehicle105 is in motion, indicating the rider to gradually reduce the speed to a safe limit, to wear the helmet and triggering a warning, enhancing safety during riding.

The subject matter offers various authentication methods i.e. camera 116, temperature sensors 120 and touch sensors 122, allowing riders to choose the best method based on their environment and personal preference.

The subject matter allows riders to switch between different authentication methods depending on external factors like lighting or temperature, ensuring reliable helmet detection under varying conditions.

If automatic authentication fails, the subject matter proposes manual intervention, ensuring that only the authorized rider can operate the vehicle, preventing unauthorized access.

The subject matter allows riders to select their preferred authentication method, based on their convenience and environmental conditions, making the system adaptable to different scenarios.

The subject matter provides real-time feedback to the rider on the authentication status, guiding them through the process and reducing confusion.

Manual authentication ensures the vehicle can still be securely authenticated and operated, even if automated sensors fail or are affected by environmental factors.

The use of multiple sensor technologies (temperature sensors 120, cameras 116, and touch sensors 122) enhances the reliability, allowing authentication to occur even if one method fails or is less effective.

The timer 115 enforces a clear and efficient authentication process, ensuring minimal delays and a smooth user experience, reducing rider frustration.

The subject matter enforces mandatory helmet-wearing and authentication before vehicle operation, ensuring consistent safety practices for all riders.

If the rider is distracted or fails to complete the authentication process, manual intervention ensures that the authentication is always completed, safeguarding the rider's safety.

The system's modular design supports integration with future technologies, such as advanced biometric sensors or AI-driven authentication, ensuring the subject matter remains relevant and adaptable.

The mandatory helmet verification and timed authentication incentivize riders to always wear helmets and complete the authentication process, fostering safer riding practices.

### LIST OF REFERENCE NUMERALS

- 102: Vehicle controller
- 105: Vehicle
- 108: Processor
- 110: Memory
- 112: Input output interfaces
- 114: Communication unit
- 115: Timer
- 116: Camera
- 118: Finger print sensor
- 119: Voice authentication unit
- 120: Temperature sensors in the helmet
- 122: Touch sensors in the helmet

## Claims

1. A method (200) of unlocking a vehicle (105), the method (200) performed by a vehicle controller (102), the method (200) comprising:
detecting (202) a side stand of a vehicle (105) moving to a disengaged position, the disengaged position is the one where the vehicle (105) is not supported by the side stand;
starting (204) a timer;
receiving (206) a user identification, if the timer (115) has not expired;
receiving (208), a helmet data, if the timer (115) has not expired;
determining (210) a helmet status based on the helmet data;
comparing (212) the received user identification with at least one pre-stored user identification;
checking (214), when the received user identification matches with at least one pre-stored user identification, whether the helmet status indicates that the user is wearing the helmet; and
unlocking (216) the vehicle (105), if:
the timer (115) has not expired;
the received user identification matches with at least one pre-stored user identification; and
the helmet status indicates that the user is wearing the helmet.

2. The method (200) as claimed in claim 1, wherein receiving the helmet data comprises receiving at least one of:
a facial image of a user from a camera (116);
data from touch sensors (122) placed inside the helmet; and
data from temperature sensors (120) placed inside the helmet.

3. The method (200) as claimed in claim 1, wherein unlocking the vehicle (105) comprises unlocking the handle lock of the vehicle (105).

4. The method (200) as claimed in claim 1, wherein unlocking the vehicle (105) comprises activating the electric system of the vehicle (105).

5. The method (200) as claimed in claim 1, wherein receiving the user identification comprises receiving at least one of a biometric data, password, and a signal from a key-fob.

6. The method (200) as claimed in claim 1, wherein receiving the biometric data comprises receiving at least one of a finger print data, a facial image and a voice command.

7. The method (200) as claimed in claim 1, wherein determining the helmet status as the user wearing the helmet, comprises at least one of:
detecting the helmet in the facial image of the user;
data from the temperature sensors (122) in the helmet is above a predefined threshold; and
data from the touch sensors (120) in the helmet is above a predefined threshold.

8. The method (200) as claimed in claim 1, comprising generating an indication to the user to re-start the user authentication by providing user identification and then wearing the helmet, if:
the timer (115) has expired;
the side stand is still in folded position; and
the vehicle (105) is still locked.

9. The method (200) as claimed in claim 7, comprising:
receiving a user identification;
receiving the helmet data, the helmet data comprising at least one of a facial image of a user from a camera (116);
data from touch sensors (122) placed inside the helmet; and
data from temperature sensors (120) placed inside the helmet;
determining a helmet status based on the helmet data;
comparing the received user identification with at least one pre-stored user identification;
checking, when the received user identification matches with at least one pre-stored user identification, whether the helmet status indicates that the user is wearing the helmet; and
unlocking the vehicle (105), if:
the timer (115) has not expired;
the received user identification matches with at least one pre-stored user identification; and
the helmet status indicates that the user is wearing the helmet.

10. The method (200) as claimed in claim 1, comprising:
detecting removal of the helmet while the vehicle (105) is in motion, by regularly analyzing the helmet data; and
generating an indication to the user to reduce the speed of the vehicle (105) and not to remove the helmet.

11. A vehicle controller (102) for unlocking a vehicle (105), the vehicle controller (102) comprising:
a processor (104); and
a memory (106) coupled to the processor (104);
the processor (104) configured to:
detect a side stand of a vehicle (105) moving to a disengaged position, the disengaged position is the one where the vehicle (105) is not supported by the side stand;
start a timer (115);
receive a user identification, if the timer (115) has not expired;
receive a helmet data, if the timer (115) has not expired;
determine a helmet status based on the helmet data;
compare the received user identification with at least one pre-stored user identification;
check, when the received user identification matches with at least one pre-stored user identification, whether the helmet status indicates that the user is wearing the helmet; and
unlock the vehicle (105), if:
the timer (115) has not expired;
the received user identification matches with at least one pre-stored user identification; and
the helmet status indicates that the user is wearing the helmet.

12. The vehicle controller (102) as claimed in claim 11, wherein the helmet data comprises at least one of:
a facial image of a user from a camera (116);
a data from touch sensors (122) placed inside the helmet; and
a data from the temperature sensors (122) placed inside the helmet;

13. The vehicle controller (102) as claimed in claim 11, comprising an unlocking mechanism to unlock a handle lock of the vehicle (105), the unlocking mechanism comprising at least one solenoid.
The vehicle controller (102) as claimed in claim 11, comprising a power supply control mechanism to activate an electric system in the vehicle (105) the power supply control mechanism comprising at least one electronic switch.
